# EUROPÄISCHE PATENTANMELDUNG

(11) **EP 2 595 260 A1**
(43) Veröffentlichungstag der Anmeldung: **22.05.2013**
(21) Anmeldenummer: 12192657.0
(22) Anmeldetag: 14.11.2012
(51) Int. Cl.: H02B 1/30, F21S 9/02, H02B 1/52

(54) **Modulares Beleuchtungssystem**

(30) Priorität: 17.11.2011 AT 17112011
(71) Anmelder: Eaton Industries (Austria) GmbH, 3943 Schrems (AT)
(72) Erfinder: Goeschl, Thomas, 3942 Hirschbach (AT)
(74) Vertreter: Leadbetter, Benedict

(57) **Zusammenfassung**

Bei einem modularen Beleuchtungssystem (1) umfassend eine mobile Leuchteinheit (2) und eine stationäre Netzverbindungseinheit (3), wobei die Leuchteinheit (2) wenigsten ein Leuchtmittel (4) aufweist, wobei die Leuchteinheit (2) und die Netzverbindungseinheit (3) entsprechend gegengleiche elektrische Steckkontakte (5) aufweisen, zur elektrischen Verbindung der Leuchteinheit (2) mit der Netzverbindungseinheit (3), wobei die Netzverbindungseinheit (3) elektrische Anschlüsse (6) zum Anschluss der Netzverbindungseinheit (3) an ein elektrisches Versorgungsnetz aufweist wird vorgeschlagen, dass die elektrischen Anschlüsse (6) als elektrische Anschlussklemmen (7) ausgebildet sind, und dass die Netzverbindungseinheit (3) eine Tragschienenaufnahme (8) aufweist, zur Anordnung an einer Tragschiene (9) eines elektrischen Verteilsystems.

## Beschreibung

Die Erfindung betrifft ein modulares Beleuchtungssystem gemäß dem Oberbegriff des Patentanspruches 1.

Es sind modulare Beleuchtungssysteme bekannt, welche aus einer tragbaren Lampe sowie einem Netzadapter bestehen, welcher in der Regel ständig mit dem Netz verbunden ist. Derartige Netzadapter sind etwa als Steckadapter zur Anordnung in einer herkömmlichen Steckdose ausgebildet. Dabei ist vorgesehen, dass die tragbare Lampe in einer Aufnahme des Netzadapters angeordnet ist, und durch diesen ein Akku innerhalb der tragbaren Lampe aufgeladen wird. Wird die tragbare Lampe benötigt, kann diese aus dem Netzadapter entnommen werden, und wie eine herkömmliche Taschenlampe betrieben werden.

Nachteilig an derartigen bekannten modularen Beleuchtungssystemen ist, dass diese ständig eine Steckdose blockieren. Nachteilig ist weiters, dass diese - sofern vorhanden - lediglich durch einen Ortskundigen gefunden werden, und folglich im Fall eines Stromausfalls, und der mit diesem einhergehenden Dunkelheit, oftmals nicht verwendet werden können, da diese schlichtweg nicht gefunden werden. Zudem stoßen derartige Lampen auf erhebliche Ablehnung und weisen daher eine entsprechend geringe Verbreitung auf, da diese nur bedingt mit den heute geltenden Vorstellungen einer Wohnraumgestaltung vereinbar sind, weshalb viele Menschen im Falle eines nächtlichen Stromausfalles, wie in früheren Zeiten auf Kerzen angewiesen sind, mit der damit einhergehenden Verletzungs- und Brandgefahr.

Aufgabe der Erfindung ist es daher ein modulares Beleuchtungssystem der eingangs genannten Art anzugeben, mit welchem die genannten Nachteile vermieden werden können, mit welchem eine einfach auffindbare mobile Notbeleuchtung bereitgestellt werden kann, und welche eine hohe Akzeptanz durch die Benutzer aufweist.

Erfindungsgemäß wird dies durch die Merkmale des Patentanspruches 1 erreicht.

Dadurch kann eine einfach auffindbare mobile Notbeleuchtung bereitgestellt werden. Durch die Tragschienenaufnahme kann das modulare Beleuchtungssystem in dem lokalen Verteilerschrank, auch als Sicherungskasten bezeichnet, angeordnet werden. Dadurch ist die Leuchteinheit einfach auffindbar. Insbesondere befindet sich die Leuchteinheit dadurch genau an dem Platz, den auch Ortsunkundige zur Fehlersuche im Fall eines Stromausfalles aufsuchen, wodurch erreicht werden kann, dass das modulare Beleuchtungssystem mit hoher Wahrscheinlichkeit gefunden wird. Durch die Anordnung im Verteilerschrank ist dieses darüber hinaus nicht im ständigen Blickfeld einer Wohnung, wodurch eine hohe Akzeptanz durch die Benutzer gegeben ist. Dadurch kann weiters die Brand- und/oder Verletzungsgefahr im Fall eines Stromausfalles vermindert werden, und die schnelle Fehlersuche unterstützt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 eine bevorzugte Ausführungsform eines modularen Beleuchtungssystems in zusammengesetztem Zustand und angeordnet auf einer Tragschiene in axonometrischer Ansicht;
Fig. 2 das modulare Beleuchtungssystem gemäß Fig. 1 mit, von der Netzverbindungseinheit getrennter Leuchteinheit in axonometrischer Ansicht;
Fig. 3 das modulare Beleuchtungssystem gemäß Fig. 1 in nachbarschaftlicher Anordnung zusammen mit zwei Schaltgeräten auf einer gemeinsamen Tragschiene in axonometrischer Ansicht;
Fig. 4 die Anordnung gemäß Fig. 3 mit, von der Netzverbindungseinheit getrennter Leuchteinheit in axonometrischer Ansicht; und

Fig. 5 eine Innenansicht einer bevorzugten Ausführungsform einer Leuchteinheit gemäß den Fig. 1 bis 4.

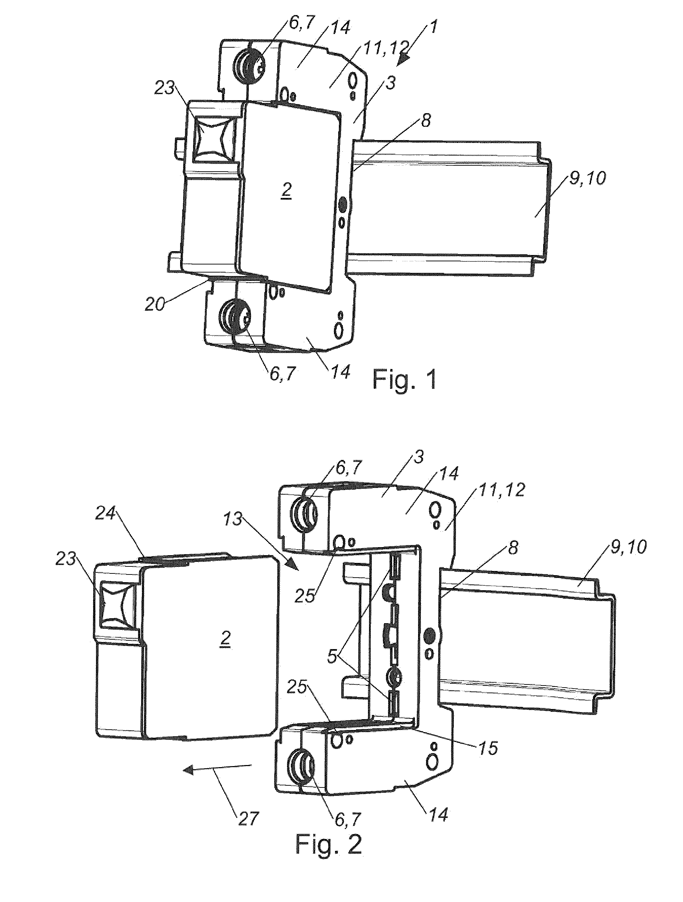

Die Fig. 1 bis 4 zeigen eine bevorzugte Ausführungsform eines modularen Beleuchtungssystems 1 umfassend eine mobile Leuchteinheit 2 und eine stationäre Netzverbindungseinheit 3, wobei die Leuchteinheit 2 wenigsten ein Leuchtmittel (4) aufweist, wobei die Leuchteinheit 2 und die Netzverbindungseinheit 3 entsprechend gegengleiche elektrische Steckkontakte 5 aufweisen, zur elektrischen Verbindung der Leuchteinheit 2 mit der Netzverbindungseinheit 3, wobei die Netzverbindungseinheit 3 elektrische Anschlüsse 6 zum Anschluss der Netzverbindungseinheit 3 an ein elektrisches Versorgungsnetz aufweist, wobei die elektrischen Anschlüsse 6 als elektrische Anschlussklemmen 7 ausgebildet sind, und wobei die Netzverbindungseinheit 3 eine Tragschienenaufnahme 8 aufweist, zur Anordnung an einer Tragschiene 9 eines elektrischen Verteilsystems.

Dadurch kann eine einfach auffindbare mobile Notbeleuchtung bereitgestellt werden. Durch die Tragschienenaufnahme 8 kann das modulare Beleuchtungssystem 1 in dem lokalen Verteilerschrank, auch als Sicherungskasten bezeichnet, angeordnet werden. Dadurch ist die Leuchteinheit 2 einfach auffindbar. Insbesondere befindet sich die Leuchteinheit 2 dadurch genau an dem Platz, den auch Ortsunkundige zur Fehlersuche im Fall eines Stromausfalles aufsuchen, wodurch erreicht werden kann, dass das modulare Beleuchtungssystem 1 mit hoher Wahrscheinlichkeit gefunden wird. Durch die Anordnung im Verteilerschrank ist dieses darüber hinaus nicht im ständigen Blickfeld einer Wohnung, wodurch eine hohe Akzeptanz durch die Benutzer gegeben ist. Dadurch kann weiters die Brand- und/oder Verletzungsgefahr im Fall eines Stromausfalles vermindert werden, und die schnelle Fehlersuche unterstützt werden.

Das gegenständliche modulare Beleuchtungssystem 1 umfasst wenigstens zwei Teile, eine stationäre Netzverbindungseinheit 3 sowie eine mobile Leuchteinheit 2. Es kann dabei vorgesehen sein, dass weitere Bauteile Teil des modularen Beleuchtungssystems 1 sind, etwa weitere mobile Leuchteinheiten 2, welche etwa parallel in einer entsprechend breiten Netzverbindungseinheit 3 angeordnet sind. Insbesondere ist vorgesehen, dass das modulare Beleuchtungssystem 1 aus genau einer stationären Netzverbindungseinheit 3 und einer mobile Leuchteinheit 2 besteht. Die mobile Leuchteinheit 2 wird im weiteren schlicht als Leuchteinheit 2 bezeichnet. Die stationäre Netzverbindungseinheit 3 wird weiters auch schlicht als Netzverbindungseinheit 3 bezeichnet.

Bevorzugt ist vorgesehen, dass das modulare Beleuchtungssystem 1 in einem elektrischen Verteilerkasten, Schaltschrank bzw. Sicherungskasten angeordnet wird.

Die mobile Leuchteinheit 2 ist als weinigsten temporär autarke und tragbare Lampe ausgebildet, etwa vergleichbar der Funktion einer Taschenlampe.

Die Netzverbindungseinheit 3 weist die Funktionalität einer Ladestation bzw. eines Aufbewahrungsbereichs für die Leuchteinheit auf.

Es ist vorgesehen, dass in einem Normalfall die Leuchteinheit 2 in bzw. an der Netzverbindungseinheit 3 angeordnet ist, und mit dieser in elektrischem Kontakt steht. Dabei wird ein innerhalb der Leuchteinheit 3 angeordneter Energiespeicher 17 aufgeladen, sofern erforderlich.

Es ist vorgesehen, dass die Leuchteinheit 2 und die Netzverbindungseinheit 3 in der Art Stecker - Steckdose zusammenwirken. Daher, dass die Netzverbindungseinheit 3 eine Aufnahme 13 für die Leuchteinheit 2 aufweist, welche derart ausgebildet ist, dass in dieser nur eine dazu bestimmte Leuchteinheit 2 angeordnet werden kann.

Nachfolgen werden die beiden bevorzugten Einzelkomponenten des modularen Beleuchtungssystems 1 beschrieben, beginnend mit der Netzverbindungseinheit 3, nachfolgend wird die Leuchteinheit 2 beschrieben, sowie die Besonderheiten des Zusammenwirkens der beiden Komponenten.

Die Netzverbindungseinheit 3 weist elektrische Anschlüsse 6 zum Anschluss der Netzverbindungseinheit 3 an ein elektrisches Versorgungsnetz, etwa das europäische 240V-Stromnetz, auf. Dabei ist vorgesehen, dass die elektrischen Anschlüsse 6 als elektrische Anschlussklemmen 7 ausgebildet sind. Die elektrischen Anschlussklemmen 7 ermöglichen den unmittelbaren Anschluss elektrischer Leiter in Kabel- oder Schienenfom an die Netzverbindungseinheit 3. Bevorzugt sind die Anschlussklemmen 7 als Schraubanschlussklemmen oder Steckanschlussklemmen ausgebildet.

Die Netzverbindungseinheit 3 weist zwei Aufnahmen auf. Eine Aufnahme 13 für die Leuchteinheit 2 sowie eine zweite Aufnahme zur Montage der Netzverbindungseinheit 3 selbst. Es ist vorgesehen, dass die Netzverbindungseinheit 3 eine Tragschienenaufnahme 8 aufweist, zur Anordnung der Netzverbindungseinheit 3 an einer Tragschiene 9 eines elektrischen Verteilsystems. Dadurch kann die Netzverbindungseinheit 3 bzw. dass modulare Beleuchtungssystem 1 einfach und unkompliziert in einem elektrischen Verteilsystem, etwa einem Schaltschrank oder einem Sicherungskasten angeordnet werden.

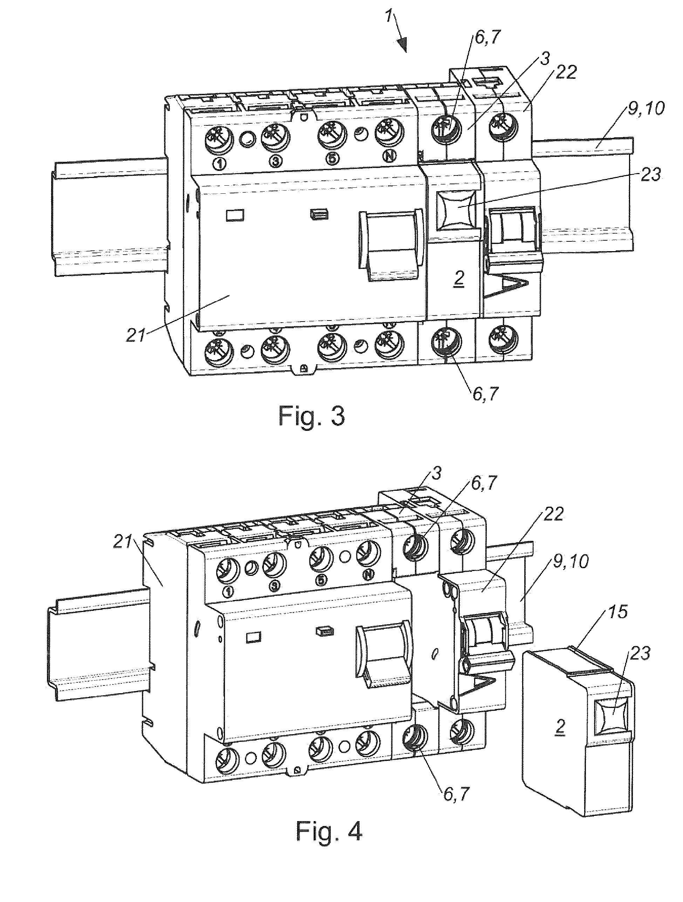

In diesem Zusammenhang ist insbesondere vorgesehen, dass die Tragschienenaufnahme 8 auch entsprechende Verriegelungssysteme, wie etwa bewegliche Laschen, Rastschieber und/oder federbelastete Schieber aufweist, zur Befestigung der Netzverbindungseinheit 3 an der Tragschiene 9 sowie zum Entfernen selbiger. Die entsprechenden Teile sind in den Figuren nicht dargestellt. Bevorzugt ist vorgesehen, dass die Tragschienenaufnahme 8 analog einer entsprechenden Tragschienenaufnahme 8 eines elektrischen Schutzschalters ausgebildet ist. Die Fig. 3 und 4 zeigen jeweils eine Anordnung aus einem Fehlerstromschutzschalter 21, einem erfindungsgemäßen modularen Beleuchtungssystem 1 und einem Leitungsschutzschalter 22, welche gemeinsam auf derselben Tragschiene 9, welche als Hutschiene 10 ausgebildet ist, angeordnet sind.

Bevorzugt ist dabei vorgesehen, dass die Tragschienenaufnahme 8 zur Anordnung an einer Hutschiene 10 und/oder einer G-Schiene und/oder einer C-Schiene ausgebildet ist. Die Fig. 1 bis 4 zeigen jeweils Netzverbindungseinheiten 3, welche auf einer Hutschiene 10 angeordnet sind.

Bevorzugt ist vorgesehen, dass die Netzverbindungseinheit 3 als Stecksockel 11 ausgebildet ist. Dies ermöglich eine einfaches Entnehmen der Leuchteinheit 2 im Bedarfsfall. Der Begriff Stecksockel 11 bezieht sich dabei auf die Steckbarkeit der Leuchteinheit 2. Daher auf das Fehlen weiterer separat zu lösender Verbindungsmittel, welche den Entnahmevorgang verzögern könnten.

In diesem Zusammenhang ist bevorzugt vorgesehen, dass die Netzverbindungseinheit 3 einen U-förmigen Grundkörper 12 mit einer Aufnahme 13 für die Leuchteinheit 2 aufweist. Bevorzugt ist dabei vorgesehen, dass in den Schenkeln 14 des U-förmigen Grundkörpers 12 wenigstens eine Führungsnut 15 angeordnet ist. Dadurch ist ein sicherer halt der Leuchteinheit 2 gewährleistet.

Wie in Fig. 2 ersichtlich sind an einem Steg des U-förmigen Grundkörper 12 elektrische Steckkontakte 5 angeordnet, zur elektrischen Verbindung der Leuchteinheit 2 mit der Netzverbindungseinheit. Die betreffenden elektrische Steckkontakte 5 sind dabei bei der bevorzugten Ausführungsform in Form weiblicher Steckkontaktaufnahmen ausgebildet.

Um ein ungewolltes Entnehmen der Leuchteinheit 2 aus der Netzverbindungseinheit 3 zu verhindern, ist bevorzugt vorgesehen, dass die in der Netzverbindungseinheit 3 angeordnete und mit dieser mit den Steckkontakten 5 verbundene Leuchteinheit 2 weiters durch eine lösbare Rastverbindung 20 in der Netzverbindungseinheit 3 gehalten ist. In den Fig. 2, 4 und 5 sind entsprechende Rastnasen an der Leuchteinheit 2 dargestellt. Die gegengleichen Rastaufnahmen 25 sind lediglich in Fig. 2 ansatzweise dargestellt.

Gemäß einer besonders bevorzugten Ausführungsform einer Netzverbindungseinheit 3 kann vorgesehen sein, dass diese im Wesentlichen Baugleich zu anderen Stecksockeln, etwa für die Aufnahme eines Überstromableiters ausgebildet sein kann. Dadurch können die technischen Aufwände zur Fertigung entsprechender Netzverbindungseinheiten 3 gering gehalten werden, da die Fertigung eines entsprechend eigenständigen Geräts unterlassen werden kann. Dadurch kann auch auf eine separate elektrotechnische Abnahme verzichtet werden.

Die Leuchteinheit 2 weist ein Gehäuse 26 auf, welches bevorzugt als Isolierstoffgehäuse ausgebildet ist. Das Gehäuse 26 weist wenigstens bereichsweise eine Form auf, welche zu einer entsprechenden Aufnahme 13 in der Netzverbindungseinheit 3 gegengleich ausgebildet ist. Dabei ist insbesondere vorgesehen, dass an dem Gehäuse 26 wenigstens eine Führungsnut 15 und/oder eine Führungsfeder angeordnet ist, welche in einer Entnahmerichtung 27 verlaufend angeordnet sind. Es ist vorgesehen, dass in der Aufnahme 13 der Netzverbindungseinheit 3 entsprechend gegengleiche Führungsnuten 15 und/oder Führungsfedern angeordnet sind.

Die Leuchteinheit 2 weist wenigstens ein Leuchtmittel 4 auf, wobei es sich um jede Art eines elektrischen Bauelements handeln kann, welches unter vorgebbaren elektrischen Betriebszuständen Licht emittiert. Insbesondere ist vorgesehen, dass das Leuchtmittel 4 als Leuchtdiode bzw. LED 16 oder OLED ausgebildet ist. LEDs bzw. OLEDs weisen vorteilhaft hohe Leuchtdichten sowie einen guten Wirkungsgrad auf. Dadurch ist sowohl eine hohe Leuchtkraft der Leuchteinheit 2 als auch eine lange Zeitdauer der möglichen Lichtemission vereinbar. Dadurch kann weiters die Leuchteinheit 2 lediglich mit einem einzigen Leuchtmittel 4 ausgestattet werden.

Die Leuchteinheit 2 weist weiters bevorzugt wenigstens einen Energiespeicher 17 auf, zum netzautarken Betrieb der Leuchteinheit 2. Dabei ist insbesondere vorgesehen, dass der Energiespeicher 17 als Akkumulator 18 ausgebildet. Alternativ können auch andere elektrische Energiespeicher 17, etwa Kondensatoren vorgesehen sein. Durch die Ausbildung als Akkumulator 18 kann eine lange Betriebsdauer bei geringem Volumen erzielt werden, sowie eine lange Lebensdauer und geringe Kosten.

Bevorzugt weist die Leuchteinheit 2 wenigstens eine Steuer- und/oder Ladeelektronik 19 auf, um einen Ladezustand des Energiespeichers 17 zu gewährleisten. Es kann jedoch auch vorgesehen sein, allerdings bei eingeschränkter Funktionalität, dass eine entsprechende Steuer- und/oder Ladeelektronik 19 in der Netzverbindungseinheit 3 angeordnet ist.

Die Leuchteinheit 2 weist elektrische Steckkontakte 5 auf zur elektrischen Verbindung der Leuchteinheit 2 mit der Netzverbindungseinheit 3. Diese ragen bei der bevorzugten Ausführungsform aus einer Unterseite des Gehäuses 26.

Das modulare Beleuchtungssystem 1 ist vorgesehen, um insbesondere beim Ausfall eines elektrischen Energieversorgungsnetzes, vulgo Stromausfall, einen sicheren und auffindbaren Beleuchtungskörper bereitzustellen. Gemäß einer bevorzugten Ausführungsform ist die Steuer- und/oder Ladeelektronik 19 derart ausgebildet, dass diese bei einem Wegfall einer Versorgungsspannung das Leuchtmittel 4 aktiviert. Dadurch beginnt das Leuchtmittel 4 automatisch bei einem Stromausfall zu leuchten. Dies weist den Vorteil auf, dass die Leuchteinheit 2 dadurch bereits selbstständig auf seine Existenz und seinen Standort aufmerksam macht. Selbst bei der Anordnung des modularen Beleuchtungssystems 1 in einem Verteilerschrank, vulgo Sicherungskasten, kann das emittierte Licht durch Spalten durchscheinen. Spätestens beim Öffnen des Sicherungskasten steht bereits Licht zur Orientierung zur Verfügung.

Alternativ hiezu kann vorgesehen sein, dass die Leuchteinheit 2 einen Schalter aufweist, welcher derart ausgebildet ist, dass dieser bei einem Entfernen der Leuchteinheit 2 von der Netzverbindungseinheit 3 das Leuchtmittel 4 aktiviert. Dadurch steht zwar nicht unmittelbar beim Eintreten des Stromausfalls Licht zur Verfügung, allerdings kann dadurch die Leuchtdauer verlängert werden, indem erst dann das Leuchtmittel 4 aktiviert wird, wenn dieses tatsächlich durch einen Benutzer benötigt wird. Dies weist insbesondere Vorteile auf, wenn ein Benutzer beim Eintreten des Stromausfalls nicht zuhause ist, und folglich diesen erst mit erheblicher Verzögerung feststellt.

Gemäß einer weiteren bevorzugten Ausführungsform kann vorgesehen sein, dass das modulare Beleuchtungssystem 1 Mittel aufweist, welche derart ausgebildet sind, dass diese das Leuchtmittel 4 aktivieren, wenn eine Tür des Verteilsystems geöffnet wird. Dadurch kann erreicht werden, dass das Leuchtmittel 4 dann aktiviert wird, wenn man Zugang zu diesem sucht. Dadurch wird die Ladung des Energiespeichers 17 nicht vermindert, und es steht trotzdem sofort Licht zur Verfügung, wenn der Sicherungskasten geöffnet wird. Diesbezüglich kann vorgesehen sein, dass das modulare Beleuchtungssystem 1 einen Schalter im Bereich der entsprechenden Tür oder einen Bewegungsmelder umfasst.

Darüber hinaus ist bevorzugt vorgesehen, dass die Leuchteinheit 2 einen herkömmlichen Ein/Aus-Schalter aufweist, wodurch der Betrieb der Leuchteinheit 2 an die jeweiligen Gegebenheiten angepasst werden kann. Dabei ist bevorzugt vorgesehen, dass mit dem betreffenden Schalter auch ein bereits automatisch aktiviertes Leuchtmittel 4 manuell deaktiviert werden kann.

Bevorzugt kann auch vorgesehen sein, dass die vorstehenden Merkmale kombiniert werden. Dabei kann etwa vorgesehen sein, dass die Steuer- und/oder Ladeelektronik 19 derart ausgebildet ist, dass diese das Leuchtmittel 4 bei einem Wegfall der Versorgungsspannung für einen vorgebbaren Zeitraum, etwa 15 Minuten, aktiviert, und sofern innerhalb dieser Zeit keine Entnahme aus der Aufnahme 13 erfolgt ist, wieder deaktiviert. In einem solchen Fall kann davon ausgegangen werden, dass kein Bedarf besteht, etwa weil der Benutzer nicht zugegen ist. In diesem Zusammenhang kann in bevorzugten Weiterbildung vorgesehen sein, dass - wie vorstehend dargelegt - die Aktvierung des bereits wieder deaktivierten Leuchtmittels 4 beim Öffnen der Tür der Sicherungskastens oder bei der Entnahme der Leuchteinheit 2 aus der Aufnahme 13 erfolgt.

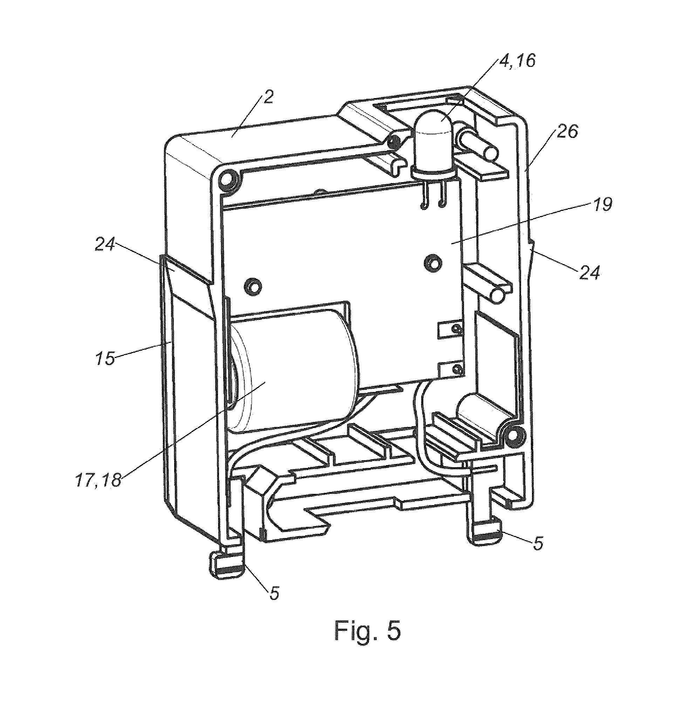

In Fig. 5 ist eine besonders bevorzugte Ausführungsform einer Leuchteinheit 2 dargestellt, wobei eine Teil des Gehäuses 26 nicht dargestellt ist, um einen Blick in das Innere der Leuchteinheit 2 zu ermöglichen. Die Leuchteinheit 2 weist ein mehrteiliges Isolierstoffgehäuse auf, wobei gut die Führungsnut 15 an einer Gehäuseseite, sowie eine Rastnase 24, als Teil einer lösbaren Rastverbindung 20 dargestellt sind. Die Leuchteinheit 2 ist dazu vorgesehen entlang des Verlaufs der Führungsnut 15 und normal zur Erstreckung der Rastnase 24 in eine entsprechend gegengleich Aufnahme 13 der Netzverbindungseinheit 3 eingeführt zu werden.

Aus einem Unterteil des Gehäuses 26 ragen die beiden elektrischen Steckkontakte 5 der Leuchteinheit 2, welche bei der bevorzugten Ausführungsform als männliche Steckkontakte 5 ausgebildet sind. Dabei ist vorgesehen, dass die Steckkontakte 5 Teil der lösbare Rastverbindung 20 sind. Gut zu erkennen sind dabei die an den beiden Steckkontakten 5 angeordneten Vertiefungen.

Innerhalb des Gehäuses 26 sind die elektrischen Steckkontakte 5 mittels Kabeln elektrisch leitend mit der Steuer- und/oder Ladeelektronik 19 verbunden, welche auf einer Leiterplatte angeordnet ist. Unmittelbar auf der betreffenden Leiterplatte ist weiters das als LED 16 ausgeführte Leuchtmittel 4 angeordnet. An der entsprechenden Stelle gegenüber der LED 16 weist das Gehäuse 26 eine Durchbrechung auf, welche bei der vollständigen Leuchteinheit 2 durch eine in Fig. 5 nicht dargestellte Abdeckung 23 verdeckt ist.

Innerhalb der Leuchteinheit 2 ist weiters der als Akkumulator 18 ausgebildete Energiespeicher 17 angeordnet, welcher mit der Steuer- und/oder Ladeelektronik 19 elektrisch leitend verbunden ist.

Gemäß einer nicht dargestellten Weiterführung der gegenständlichen Erfindung kann vorgesehen sein, dass die Leuchteinheit 2 weiters einen innerhalb des Gehäuses 26 angeordneten selbstaufrollenden Seilzug aufweist, an welchem insbesondere ein außerhalb des Gehäuses 26 angeordnetes Gegenstück befestigt ist. Dabei ist vorgesehen, dass die Länge des Seilzugs, bevorzugt ist ein dünnes Drahtseil, derart bemessen ist, dass die Leuchteinheit 2 bei ausgezogenem Seilzug als Stirnlampe getragen werden kann. Durch den selbstaufrollenden Seilzug wird eine derartige Stirnlampe fest an einem Kopf eines Benutzers oder an einem Gegenstand gehalten. Bei entsprechender Anordnung des Leuchtmittels 4 kann dadurch eine Leuchteinheit 2 gebildet werden, welche im Notfall ein Arbeiten mit beiden Händen zulässt. Dabei kann die gesamte erforderlich Mechanik in dem Gehäuse 26 angeordnet werden, sodass die vorstehend besprochenen Funktionalitäten weiterhin gegeben sind.

## Patentansprüche

1. Modulares Beleuchtungssystem (1) umfassend eine mobile Leuchteinheit (2) und eine stationäre Netzverbindungseinheit (3), wobei die Leuchteinheit (2) wenigsten ein Leuchtmittel (4) aufweist, wobei die Leuchteinheit (2) und die Netzverbindungseinheit (3) entsprechend gegengleiche elektrische Steckkontakte (5) aufweisen, zur elektrischen Verbindung der Leuchteinheit (2) mit der Netzverbindungseinheit (3), wobei die Netzverbindungseinheit (3) elektrische Anschlüsse (6) zum Anschluss der Netzverbindungseinheit (3) an ein elektrisches Versorgungsnetz aufweist, **dadurch gekennzeichnet, dass** die elektrischen Anschlüsse (6) als elektrische Anschlussklemmen (7) ausgebildet sind, und dass die Netzverbindungseinheit (3) eine Tragschienenaufnahme (8) aufweist, zur Anordnung an einer Tragschiene (9) eines elektrischen Verteilsystems.

2. Modulares Beleuchtungssystem (1) nach Anspruch 1, **dadurch gekennzeichnet, dass** die Tragschienenaufnahme (8) zur Anordnung an einer Hutschiene (10) und/oder einer G-Schiene und/oder einer C-Schiene ausgebildet ist.

3. Modulares Beleuchtungssystem (1) nach Anspruch 1 oder 2, **dadurch gekennzeichnet, dass** die Netzverbindungseinheit (3) als Stecksockel (11) ausgebildet ist.

4. Modulares Beleuchtungssystem (1) nach einem der Ansprüche 1 bis 3, **dadurch gekennzeichnet, dass** die Netzverbindungseinheit (3) einen U-förmigen Grundkörper (12) mit einer Aufnahme (13) für die Leuchteinheit (2) aufweist.

5. Modulares Beleuchtungssystem (1) nach Anspruch 4, **dadurch gekennzeichnet, dass** in den Schenkeln (14) des U-förmigen Grundkörpers (12) wenigstens eine Führungsnut (15) angeordnet ist.

6. Modulares Beleuchtungssystem (1) nach einem der Ansprüche 1 bis 5,
**dadurch gekennzeichnet, dass** das Leuchtmittel (4) als LED (16) oder OLED ausgebildet ist.

7. Modulares Beleuchtungssystem (1) nach einem der Ansprüche 1 bis 6, **dadurch gekennzeichnet, dass** die Leuchteinheit (2) wenigstens einen Energiespeicher (17), insbesondere einen Akkumulator (18), aufweist.

8. Modulares Beleuchtungssystem (1) nach einem der Ansprüche 1 bis 7, **dadurch gekennzeichnet, dass** die Leuchteinheit (2) wenigstens eine Steuer- und/oder Ladeelektronik (19) aufweist.

9. Modulares Beleuchtungssystem (1) nach Anspruch 8, **dadurch gekennzeichnet, dass** die Steuer- und/oder Ladeelektronik (19) derart ausgebildet ist, dass diese bei einem Wegfall einer Versorgungsspannung das Leuchtmittel (2) aktiviert.

10. Modulares Beleuchtungssystem (1) nach einem der Ansprüche 1 bis 9, **dadurch gekennzeichnet, dass** die Leuchteinheit (2) einen Schalter aufweist, welcher derart ausgebildet ist, dass dieser bei einem Entfernen der Leuchteinheit (2) von der Netzverbindungseinheit (3) das Leuchtmittel (4) aktiviert.

11. Modulares Beleuchtungssystem (1) nach einem der Ansprüche 1 bis 10, **dadurch gekennzeichnet, dass** das modulare Beleuchtungssystem (1) Mittel aufweist, welche derart ausgebildet sind, dass diese das Leuchtmittel (4) aktivieren, wenn eine Tür des Verteilsystems geöffnet wird.

12. Modulares Beleuchtungssystem (1) nach einem der Ansprüche 1 bis 11, **dadurch gekennzeichnet, dass** die in der Netzverbindungseinheit (3) angeordnete und mit dieser mit den Steckkontakten (5) verbundene Leuchteinheit (2) weiters durch eine lösbare Rastverbindung (20) in der Netzverbindungseinheit (3) gehalten ist.

13. Modulares Beleuchtungssystem (1) nach Anspruch 12, **dadurch gekennzeichnet, dass** die lösbare Rastverbindung (20) an den Steckkontakten (5) ausgebildet ist.
